# EUROPEAN PATENT SPECIFICATION

(11) **EP 3 237 986 B1**
(45) Date of publication and mention of the grant of the patent: **26.01.2022**
(21) Application number: 15801417.5
(22) Date of filing: 26.11.2015
(51) Int. Cl.: A01D 34/00

(54) **CONTROL OF DOWNHILL MOVEMENT FOR AN AUTONOMOUS GUIDED VEHICLE**
STEUERUNG DER ABWÄRTSBEWEGUNG FÜR EIN AUTONOM GEFÜHRTES FAHRZEUG
COMMANDE DE DÉPLACEMENT EN DESCENTE POUR UN VÉHICULE AUTOGUIDÉ

(30) Priority: 23.12.2014 SE 1451647
(43) Date of publication of application: 01.11.2017
(73) Proprietor: Husqvarna AB, 561 82 Huskvarna (SE)
(72) Inventor: WILLGERT, Mikael, 163 54 Spånga (SE); KAMFORS, Mattias, 554 48 Jönköping (SE)
(86) International application number: PCT/EP2015/077851
(87) International publication number: WO 2016/102146

(56) References cited:
- WO-A1-2014/129941
- DE-A1- 19 931 141
- US-A- 5 444 965

## Description

### TECHNICAL FIELD

This application relates to a method, a robotic work tool system, a robotic work tool and a computer-readable medium for an improved handling of slopes and hills.

### BACKGROUND

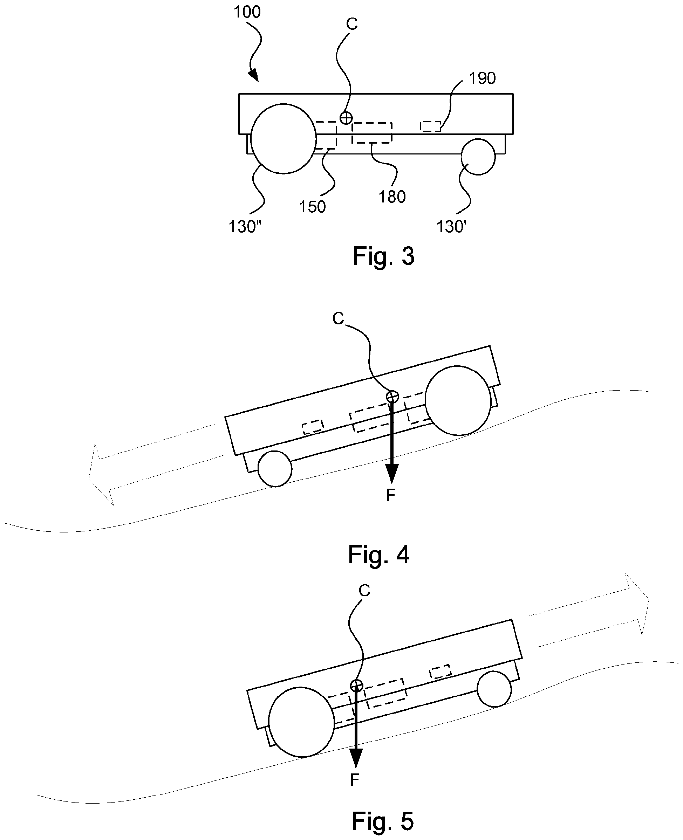

As most contemporary robotic work tools are designed to operate in areas with obstacles and in rough terrain it is important to maintain good control of its movement, allowing it to turn accurately. The steering control of a robotic work tool may be impaired or reduced when going down hill (as will also be explained below with reference to figure 3) as the gravitational forces will then be shifted to put extra load on the front wheels. The reduction n traction and control may cause the robotic work tool to start sliding or otherwise be unable to steer accurately.

WO 2014/129941 A1 discloses a robotic work tool configured for improved turning in a slope, said robotic work tool comprising a slope detector, at least one magnetic field sensor, a controller, and at least two driving wheels, the robotic work tool being configured to detect a boundary wire and in response thereto determine if the robotic work tool is in a slope, and if so, perform a turn by rotating each wheel at a different speed thereby reducing a risk of the robotic work tool getting stuck.

Even though the problems above have been discussed for lawnmower robotic work tools, the same or similar problems exist also for other robotic work tools.

There is thus a need for a manner of maintaining accurate control of the steering of a robotic work tool when going downhill.

### SUMMARY

It is an object of the teachings of this application to overcome the problems listed above by providing a robotic work tool comprising at least two rear wheels, at least one front wheel and a controller for controlling the propulsion of the robotic work tool and a level detection device, wherein the robotic work tool is configured to detect a downwards slope and then turn and reverse down the downwards slope.

In one embodiment the robotic work tool is a lawnmower robot.

It is also an object of the teachings of this application to overcome the problems listed above by providing a robotic work tool system comprising a robotic work tool according to any claim above and a charging station.

It is also an object of the teachings of this application to overcome the problems listed above by providing a method for use in a robotic work tool comprising at least two rear wheels, at least one front wheel, the method comprising detecting a downwards slope and then turn and reverse down the downwards slope.

It is also an object of the teachings of this application to overcome the problems listed above by providing a computer readable storage medium encoded with instructions that, when executed on a processor, performs the method according to herein.

The inventors of the present invention have realized, after inventive and insightful reasoning that by reversing down a slope, full advantage may be taken of the gravitational force to provide better traction and steering control.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF DRAWINGS

The invention will be described in further detail under reference to the accompanying drawings in which:
Figure 1 shows a schematic overview of a robotic work tool according to one embodiment of the teachings of this application;
Figure 2 shows a schematic view of a robotic working tool system according to one embodiment of the teachings of this application;
Figure 3 shows a schematic view of a robotic working tool system in operation according to one embodiment of the teachings of this application;
Figure 4 shows a schematic side view of a robotic working tool;
Figure 5 shows a schematic side view of a robotic working tool;
Figure 6 shows a schematic side view of a robotic working tool according to herein;
Figure 7 shows a flowchart for a general method according to herein; and
Figure 8 shows a schematic view of a computer-readable medium according to herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

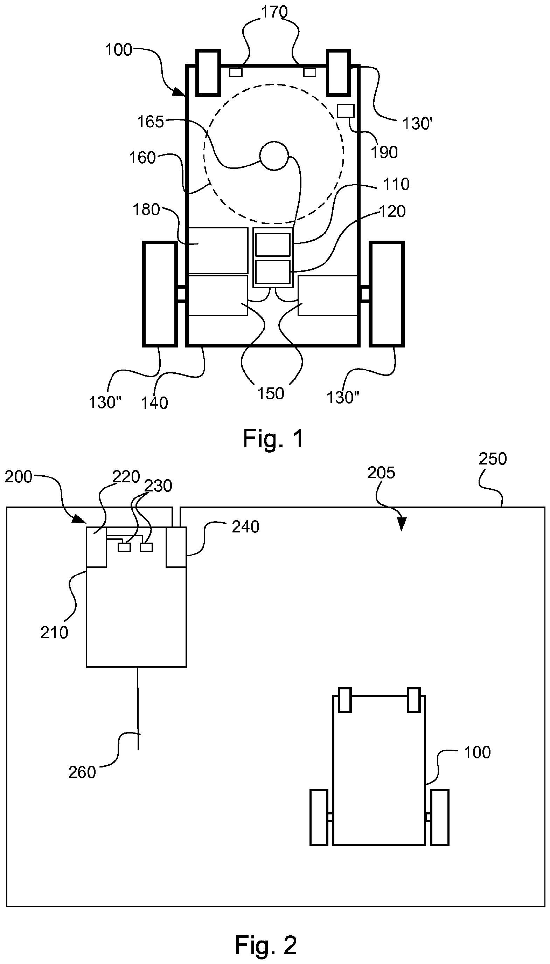

Figure 1 shows a schematic overview of a robotic work tool 100 having a body 140 and a plurality of wheels 130. In the exemplary embodiment of figure 1 the robotic work tool 100 has four wheels 130, two front wheels 130' and two rear wheels 130". It should be noted that the robotic work tool 100 may also be arranged with only one front wheel 130'. At least some of the wheels 130 are drivably connected to at least an electric motor 150. It should be noted that even if the description herein is focussed on electric motors, combustion engines may alternatively or additionally be used possibly in combination with an electric motor.

In the example of figure 1, the rear wheels 130" are connected to each an electric motor 150. This allows for driving the rear wheels 130" independently of one another which, for example, enables steep turning. The front wheel(s) 130' may be arranged to pivot to enable the robotic work tool 100 to execute steep turns more easily and without adding to the complexity of the robotic work tool 100, such as through advanced steering of the front wheel(s) 130'.

The robotic work tool 100 also comprises a controller 110. The controller 110 may be implemented using instructions that enable hardware functionality, for example, by using executable computer program instructions in a general-purpose or special-purpose processor that may be stored on a computer readable storage medium (disk, memory etc) 120 to be executed by such a processor. The controller 110 is configured to read instructions from the memory 120 and execute these instructions to control the operation of the robotic work tool 100. The controller 110 may be implemented using any suitable, publically available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic work tool 100 further may have at least one sensor 170, in the example of figure 1 there are two sensors 170, arranged to detect a magnetic field (not shown). The sensors are connected to the controller 110 and the controller 110 is configured to process any signals received from the sensors 170. The sensor signals may be caused by the magnetic field caused by a control signal being transmitted through a boundary wire (for more details on charging stations, control signals and boundary wires, see the description below with reference to figure 2). This enables the controller 110 to determine whether the robotic work tool 100 is inside or outside an area enclosed by a boundary wire.

It should be noted that the teachings herein may also be used for a robotic work tool 100 that is configured to operate in a work area, where the work area is not bounded by a boundary wire. Examples of such robotic work tools 100 are tools arranged to physically detect a boundary by collision detection, or a robotic work tool 100 that uses a position determination system (such as GNSS) to maintain a position within the work area, which work area is specified by coordinates.

The controller 110 is connected to the motors 150 for controlling the propulsion of the robotic work tool 100 which enables the robotic work tool 100 to service an enclosed area without leaving the area.

The robotic work tool 100 also comprises a work tool 160, which may be a grass cutting device, such as a rotating blade 160 driven by a cutter motor 165. The cutter motor 165 is connected to the controller 110 which enables the controller 110 to control the operation of the cutter motor 165. The controller 110 is also configured to determine the load exerted on the rotating blade, by for example measure the power delivered to the cutter motor 165 or by measuring the axle torque exerted by the rotating blade. The robotic work tool 100 is, in one embodiment, a lawnmower robot.

In one embodiment the robotic work tool 100 is a farming equipment. In one embodiment the robotic work tool 100 is a golf ball collecting tool. The robotic work tool 100 may also be a vacuum cleaner, a floor cleaner, a street sweeper, a snow removal tool, a mine clearance robot or any other robotic work tool that is required to operate in a work area in a methodical and systematic or position oriented manner.

The robotic work tool 100 also has (at least) one battery 180 for providing power to the motors 150 and the cutter motor 165. Alternatively or additionally the robotic work tool may have a fuel tank 180 for supplying fuel to any other type of engine 150.

The robotic work tool 100 also comprises at least one level detection sensor 190, which is configured to detect if the robotic work tool 1 00 is currently at an angle, that is, not horizontal. The level detection sensor 190 may be arranged to detect the level using a gyroscope. The level detection sensor 190 may also or alternatively be arranged to detect the level by monitoring the load on the rear wheels 130" and on the front wheels 130'. If the load on the rear wheels 130" is higher than the load on the front wheels 130', the robotic work tool 100 is most likely going up a slope or a hill. If the load on the rear wheels 130" is lower than the load on the front wheels 130', the robotic work tool 100 is most likely going down a slope or a hill.

Figure 2 shows a schematic view of a robotic work tool system 200 comprising a charging station 210 and a boundary wire 250 arranged to enclose a working area 205, the working area 205 not necessarily being a part of the robotic work tool system 200, in which the robotic work tool 100 is supposed to service. As stated above, the robotic work tool 100 may be arranged to operate solely using the position determining device in which case no boundary wire 250 nor signal generator (to be disclosed) is part of the robotic work tool system 200. The charging station 210 has a charger 220 coupled to, in this embodiment, two charging plates 230. The charging plates 230 are arranged to co-operate with corresponding charging plates (not shown) of the robotic work tool 100 for charging the battery 180 of the robotic work tool 100. The charging station 210 also has, or may be coupled to, a signal generator 240 for providing a control signal (not shown) to be transmitted through the boundary wire 250. Optionally, the charging station 210 also has a guide cable 260 for enabling the robotic work tool to find the entrance of the charging station 210.

Figure 3 shows a schematic side view of the robotic work tool 100 according to figures 1 and 2. As the rear wheels 130" are connected to the motor(s) 150 and the battery 180 (or fuel tank) is connected to the motor(s) 150 and therefore most likely arranged close to the motor(s) 150, the center of gravity C for the robotic work tool 100 is offset towards the rear of the robotic work tool 100 as is shown in figure 3. The center of gravity can be moved towards the center of the robotic work tool 1 00 by rearranging the components, but then additional space around the cutting tool 165 has to be provided. As the center of gravity C is closer to the rear wheels 130", the rear wheels will in most cases provide for better traction, as the gravity force F helps push down on the rear wheels 130". Also, the rear wheels 130" usually have a larger diameter than the front wheels 130' and are provided with tread patterns for providing better traction, as the robotic work tool 100 is designed to provide god traction while being able to do steep turns.

Figure 4 shows a schematic view of a robotic work tool 100 going down a slope or hill. As can be seen the gravitational force F is now partially directed forwards in relation to the direction of the robotic work tool 100. This puts a higher load on the front wheels 130' and a lower load on the rear wheels 130". As the robotic work tool 100 is designed to use the rear wheels 130" for steering the robotic work tool 100, whereby the front wheels 130' only pivot, the control of the steering of the robotic work tool 1 00 may be impaired when going down hill. However, when the robotic work tool 100 is going up a hill or a slope, see figure 5 which shows a side view of a robotic work tool 100 going up a hill, the gravitational force F is now even closer to the rear wheels 130" thereby providing additional traction and control.

The inventors have realized that by going against normal views on directions of movement and instead of driving the robotic work tool 100 forwards down a hill, the robotic work tool 100 can be driven backwards down a hill whereby the robotic work tool 100 gains additional traction and control by utilizing its weight distribution and the incline of the slope or hill.

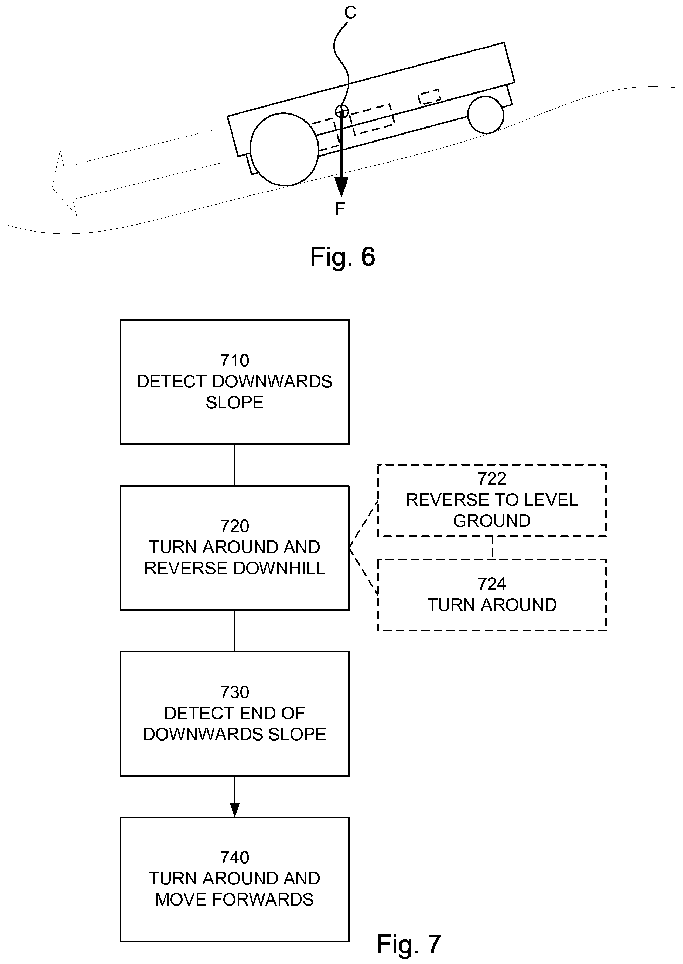

Figure 6 shows a schematic side view of a robotic work tool 100 according to the teachings herein and figure 7 shows a flowchart for a general method according to the teachings herein. The robotic work tool 100 is configured to detect that it is embarking on a downwards trajectory or coming upon a downwards slope. This may be detected by sensing an increased load on the front wheel(s) 130' and/or through a gyroscope or other level detection devices 190. As it is determined that the robotic work tool 100 is heading downwards, the robotic work tool 100 is configured to turn 720 around approximately 180 degrees and reverse down the slope. The robotic work tool 1 00 may be configured to detect the direction of the slope and turn to so that its rear faces the same direction. The direction of the slope may be determined through consulting a map stored in the memory 120 of the robotic work tool 100. Or by moving in a scanning pattern, sensing in which direction the incline is the slope is the greatest.

The robotic work tool 100 may be configured to turn around 180 degrees as the downward trajectory is detected. The robotic work tool 100 may also or alternatively be configured to reverse until it is on substantially level ground 722, or at least until the incline is reduced and then turn around 180 degrees 724. This enables the robotic work tool 100 to do the turn with full traction on the rear wheels 130" thereby increasing the accuracy of the turning and also preventing any sliding to occur as the robotic work tool 100 is turning.

The robotic work tool 100 is further configured to detect that the downwards slope ends 730 and then turn to move in a forwards direction again 740. The end of the slope may be determined in a manner similar to detecting the start of the slope.

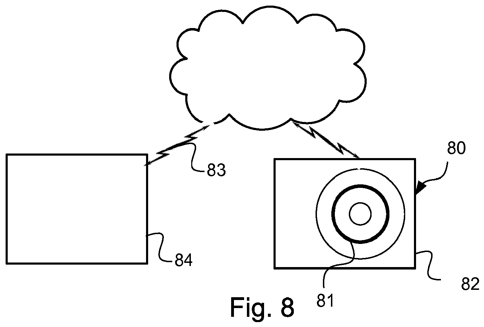

Figure 8 shows a schematic view of a computer-readable medium as described in the above. The computer-readable medium 80 is in this embodiment a data disc 80. In one embodiment the data disc 80 is a magnetic data storage disc. The data disc 80 is configured to carry instructions 81 that when loaded into a controller, such as a processor, executes a method or procedure according to the embodiments disclosed above. The data disc 80 is arranged to be connected to or within and read by a reading device 82, for loading the instructions into the controller. One such example of a reading device 82 in combination with one (or several) data disc(s) 80 is a hard drive. It should be noted that the computer-readable medium can also be other mediums such as compact discs, digital video discs, flash memories or other memory technologies commonly used. In such an embodiment the data disc 80 is one type of a tangible computer-readable medium 80.

The instructions 81 may also be downloaded to a computer data reading device 84, such as the controller 110 or other device capable of reading computer coded data on a computer-readable medium, by comprising the instructions 81 in a computer-readable signal 83 which is transmitted via a wireless (or wired) interface (for example via the Internet) to the computer data reading device 84 for loading the instructions 81 into a controller. In such an embodiment the computer-readable signal 83 is one type of a non-tangible computer-readable medium 80.

The instructions may be stored in a memory (not shown explicitly in figure 8, but referenced 120 in figure 1) of the computer data reading device 84.

References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As the teachings herein do not necessarily require any additional hardware (as many robotic work tools 100 are configured with gyroscopes or load detectors 190 through their collision and/or lift detection systems, a robotic work tool 100 may be configured according to the teachings herein through a simple software update wherein instructions for executing a method according to herein may be downloaded to the memory 120 of the robotic work tool.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A robotic work tool (100) comprising at least two rear wheels (130") independently drivable for enabling steering of the robotic work tool, at least one front wheel (130') arranged to be pivotable and a controller (110) for controlling the propulsion of the robotic work tool (100) and a level detection device (190), wherein the robotic work tool (100) is **characterized in that** it is configured to
detect a downwards slope based on the level detection device (190) and then turn and reverse down the downwards slope.

2. The robotic work tool system (200) according to claim 1, wherein the robotic work tool (100) is further configured to reverse to substantially flat ground when the downwards slope is detected and then turn to reverse down the downwards slope.

3. The robotic work tool system (200) according to claim 1 or 2, wherein the robotic work tool (100) is further configured to detect a direction of the slope and turn to so that its rear faces the same direction.

4. The robotic work tool system (200) according to claim 1, 2 or 3, wherein the robotic work tool (100) is further configured to detect an end of the downwards slope and then turn and proceed forwards.

5. The robotic work tool (100) according to any preceding claim, wherein the robotic work tool (100) is a robotic lawnmower (100).

6. A robotic work tool system (200) comprising a robotic work tool (100) according to any claim above and a charging station (210).

7. A method for use in a robotic work tool (100) comprising at least two rear wheels (130") independently drivable for enabling steering of the robotic work tool, at least one front wheel (130') arranged to be pivotable, the method being **characterized in that** it comprises detecting a downwards slope and then turn and reverse down the downwards slope.

8. A computer readable storage medium (80) encoded with instructions (81) that, when executed on a processor, performs the method according to claim 7.

## Patentansprüche

1. Roboterarbeitsinstrument (100), das mindestens zwei Hinterräder (130"), die unabhängig ansteuerbar sind, um ein Lenken des Roboterarbeitsinstruments zu ermöglichen, mindestens ein Vorderrad (130'), das ausgelegt ist, drehbar zu sein, eine Steuereinheit (110) zum Steuern des Antriebs des Roboterarbeitsinstruments (100) und eine Niveaudetektionsvorrichtung (190) umfasst, wobei das Roboterarbeitsinstrument (100) **gekennzeichnet ist durch** Detektieren einer nach unten gerichteten Steigung auf der Grundlage der Niveaudetektionsvorrichtung (190) und dann Wenden und rückwärts Hinunterfahren der nach unten gerichteten Steigung.

2. Roboterarbeitsinstrumentensystem (200) nach Anspruch 1, wobei das Roboterarbeitsinstrument (100) ferner konfiguriert ist, zu einem im Wesentlichen ebenen Boden rückwärtszufahren, wenn die nach unten gerichtete Steigung detektiert wird, und dann zu wenden, um die nach unten gerichteten Steigung rückwärts hinunterzufahren.

3. Roboterarbeitsinstrumentensystem (200) nach Anspruch 1 oder 2, wobei das Roboterarbeitsinstrument (100) ferner konfiguriert ist, eine Richtung der Steigung zu detektieren und sich ihr zuzuwenden, derart, dass seine Rückseite in dieselbe Richtung weist.

4. Roboterarbeitsinstrumentensystem (200) nach Anspruch 1, 2 oder 3, wobei das Roboterarbeitsinstrument (100) ferner konfiguriert ist, ein Ende der nach unten gerichteten Steigung zu detektieren und dann zu wenden und vorwärts weiterzufahren.

5. Roboterarbeitsinstrument (100) nach einem vorhergehenden Anspruch, wobei das Roboterarbeitsinstrument (100) ein Mähroboter (100) ist.

6. Roboterarbeitsinstrumentensystem (200), das ein Roboterarbeitsinstrument (100) nach einem vorhergehenden Anspruch und eine Ladestation (210) umfasst.

7. Verfahren zur Verwendung in einem Roboterarbeitsinstrument (100), das mindestens zwei Hinterräder (130"), die unabhängig ansteuerbar sind, um ein Lenken des Roboterarbeitsinstruments zu ermöglichen, und mindestens ein Vorderrad (130'), das ausgelegt ist, drehbar zu sein, umfasst, wobei das Verfahren **gekennzeichnet ist durch** ein Detektieren einer nach unten gerichteten Steigung und dann Wenden und rückwärts Hinunterfahren der nach unten gerichteten Steigung.

8. Computerlesbares Speichermedium (80), das mit Befehlen (81) codiert ist, die, wenn sie in einem Prozessor ausgeführt werden, das Verfahren nach Anspruch 7 durchführen.

## Revendications

1. Outil de travail robotique (100), comprenant au moins deux roues arrière (130") entraînables indépendamment pour permettre le braquage de l'outil de travail robotique, au moins une roue avant (130') agencée pivotante et une unité de commande (110) pour commander la propulsion de l'outil de travail robotique (100) et un dispositif de détection de niveau (190), l'outil de travail robotique (100) étant **caractérisé en ce qu'**il est configuré pour
détecter une pente descendante sur la base du dispositif de détection de niveau (190) puis réaliser un virage et descendre en marche arrière la pente descendante.

2. Système (200) à outil de travail robotique selon la revendication 1, dans lequel l'outil de travail robotique (100) est configuré en outre pour faire marche arrière jusqu'à un sol sensiblement plat lorsque la pente descendante est détectée puis réaliser un virage pour descendre en marche arrière la pente descendante.

3. Système (200) à outil de travail robotique selon la revendication 1 ou 2, dans lequel l'outil de travail robotique (100) est configuré en outre pour détecter une direction de la pente et réaliser un virage vers elle de façon à ce que ses faces arrière soient orientées dans la même direction.

4. Système (200) à outil de travail robotique selon la revendication 1, 2 ou 3, dans lequel l'outil de travail robotique (100) est configuré en outre pour détecter une extrémité de la pente descendante puis réaliser un virage et continuer en marche avant.

5. Outil de travail robotique (100) selon l'une quelconque des revendications précédentes, l'outil de travail robotique (100) étant une tondeuse à gazon robotique (100).

6. Système (200) à outil de travail robotique, comprenant un outil de travail robotique (100) selon l'une quelconque des revendications ci-dessus et une station de charge (210).

7. Procédé destiné à être utilisé dans un outil de travail robotique (100) comprenant au moins deux roues arrière (130") entraînables indépendamment pour permettre le braquage de l'outil de travail robotique, au moins une roue avant (130') agencée pivotante, le procédé étant **caractérisé en ce qu'**il comprend la détection d'une pente descendante puis la réalisation d'un virage et la descente en marche arrière de la pente descendante.

8. Support d'enregistrement lisible par ordinateur (80) codé avec des instructions (81) qui, lorsqu'elles sont exécutées sur un processeur, réalisent le procédé selon la revendication 7.
